# EUROPEAN PATENT APPLICATION

(11) **EP 4 300 753 A1**
(43) Date of publication of application: **03.01.2024**
(21) Application number: 21928093.0
(22) Date of filing: 16.12.2021
(51) Int. Cl.: H02J 7/00, G06F 1/26, H02J 1/00

(54) **ELECTRONIC DEVICE, CONNECTING DEVICE, DEVICE SYSTEM, AND CONTROL METHOD**

(30) Priority: 26.02.2021 JP 2021029417
(71) Applicant: Panasonic Intellectual Property Management Co., Ltd., Osaka-shi, Osaka 540-6207 (JP)
(72) Inventor: SATOU, Wataru, Kadoma-shi, Osaka 571-0057 (JP); YOKOYAMA, Yasuyuki, Kadoma-shi, Osaka 571-0057 (JP)
(74) Representative: Novagraaf International SA
(86) International application number: PCT/JP2021/046469
(87) International publication number: WO 2022/181000

(57) **Abstract**

An electronic device includes a connector and a power feed circuit. The connector includes a plurality of first terminals. The plurality of first terminals are connected to a plurality of second terminals of a connecting device and include: one or more power supply terminals to supply direct-current power to the connecting device; and a detection terminal. When the connecting device is connected to the connector, the power feed circuit determines whether a second terminal, among the plurality of second terminals, connected to the detection terminal is a specific terminal. The power feed circuit supplies direct-current supply power having a voltage value set based on a result of the determination to the connecting device via the one or more power supply terminals of the connector.

## Description

### TECHNICAL FIELD

The present disclosure generally relates to an electronic device, a connecting device, a device system, and a control method.

### BACKGROUND ART

PTL 1 discloses an input and output circuit, a connector, a power supply circuit, and an internal processing circuit that are mounted on a smartphone, which is a type of electronic device. The input and output circuit, the input and output circuit includes a power supply detection circuit, an identification terminal voltage detection circuit, and a controller. The power supply detection circuit detects external power feed to a power supply terminal. The controller identifies an accessory device (connecting device) connected to the connector on the basis of a detection result of the identification terminal voltage detection circuit and a detection result of the power supply detection circuit. The identification terminal voltage detection circuit can narrow down accessory device candidates on the basis of presence or absence of power feed detected by the power supply detection circuit.

### Citation List

### Patent Literature

PTL 1: Unexamined Japanese Patent Publication No. 2012-209902

### SUMMARY OF THE INVENTION

In PTL 1, it is possible to narrow down accessory device candidates on the basis of presence or absence of power feeding detected by the power supply detection circuit. However, it is impossible to change a voltage value of the electric power supplied to the accessory device, depending on the accessory device.

The present disclosure provides an electronic device, a connecting device, a device system, and a control method that are capable of setting a voltage value of direct-current supply power supplied from the electronic device to the connecting device to a value corresponding to the connecting device.

An electronic device according to one aspect of the present disclosure includes a connector and a power feed circuit. The connector includes a plurality of first terminals. The plurality of first terminals are connected to a plurality of second terminals of a connecting device and include: one or more power supply terminals to supply direct-current power to the connecting device; and a detection terminal. The power feed circuit is configured to perform, when the connecting device is connected to the connector, a determination whether a second terminal, among the plurality of second terminals, connected to the detection terminal is a specific terminal, and supply direct-current supply power having a voltage value set based on a result of the determination to the connecting device via the one or more power supply terminals of the connector.

A connecting device according to an aspect of the present disclosure includes the plurality of second terminals that are connected to the plurality of first terminals of the connector of the electronic device according to the above aspect. The plurality of second terminals include: one or more input terminals that are connected to the one or more power supply terminals and receive the direct-current supply power from the electronic device; and an identification terminal that is electrically separated from the one or more input terminals and is connected, as the specific terminal, to the detection terminal.

A device system according to an aspect of the present disclosure includes: the electronic device according to the above aspect; and the connecting device connected to the electronic device. The connecting device has the plurality of second terminals that are connected to the plurality of first terminals of the connector of the electronic device. The plurality of second terminals include: one or more input terminals that are connected to the one or more power supply terminals and receive the direct-current supply power from the electronic device; and an identification terminal that is electrically separated from the one or more input terminals and is connected, as a specific terminal, to the detection terminal.

A control method according to one aspect of the present disclosure is a control method for supplying direct-current supply power from an electronic device to a connecting device connected to the electronic device. The electronic device includes a connector including a plurality of first terminals, and the plurality of first terminals are connected to a plurality of second terminals of the connecting device and include: one or more power supply terminals to supply direct-current power to the connecting device; and a detection terminal. The control method includes: determining, when the connecting device is connected to the connector, whether a second terminal, among the plurality of second terminals, connected to the detection terminal is a specific terminal; and supplying direct-current supply power having a voltage value set based on a result of the determining to the connecting device via the one or more power supply terminals of the connector.

With the aspect of the present disclosure, a voltage value of a direct-current supply power supplied from the electronic device to a connecting device can be set to a value corresponding to the connecting device.

### BRIEF DESCRIPTION OF THE DRAWINGS

Fig. 1 is a block diagram of a configuration example of a device system including an electronic device and a connecting device according to an exemplary embodiment.
Fig. 2 is a schematic diagram of a configuration example of a connector of the electronic device of Fig. 1, with a part of the connector omitted.
Fig. 3 is a schematic diagram of a configuration example of a connector of the connecting device of Fig. 1, with a part of the connector omitted.
Fig. 4 is an explanatory diagram of an example of an operation of a power feed circuit in the device system of Fig. 1.
Fig. 5 is a block diagram of a configuration example of a device system including the electronic device of Fig. 1 and a connecting device different from the connecting device of Fig. 1.
Fig. 6 is an explanatory diagram of an example of an operation of a power feed circuit in the device system of Fig. 5.
Fig. 7 is a flowchart of an example of an operation of the electronic device of Fig. 1.

### DESCRIPTION OF EMBODIMENT

### [1. Exemplary embodiment]

### [1.1 Overview]

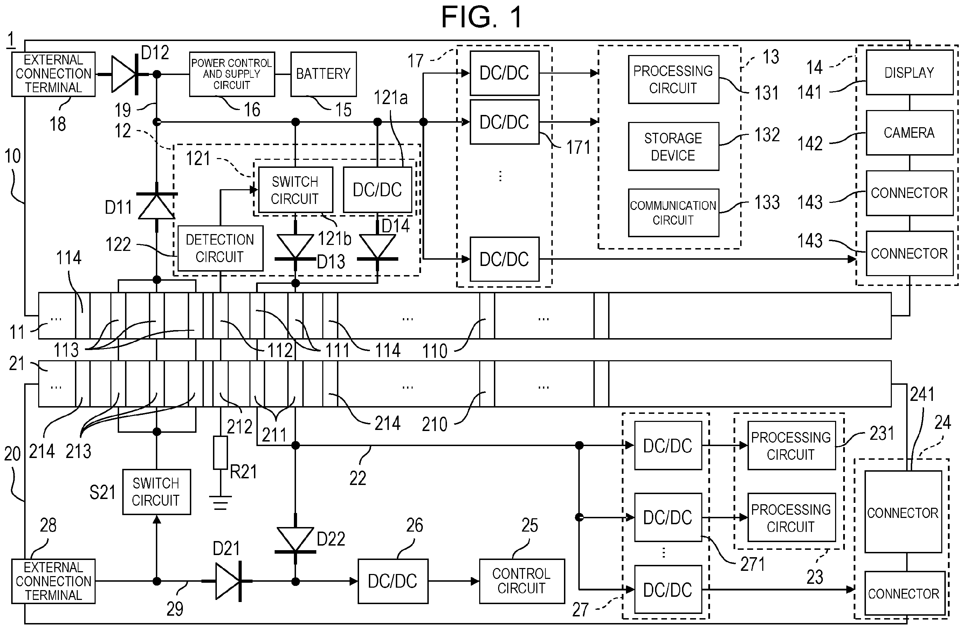

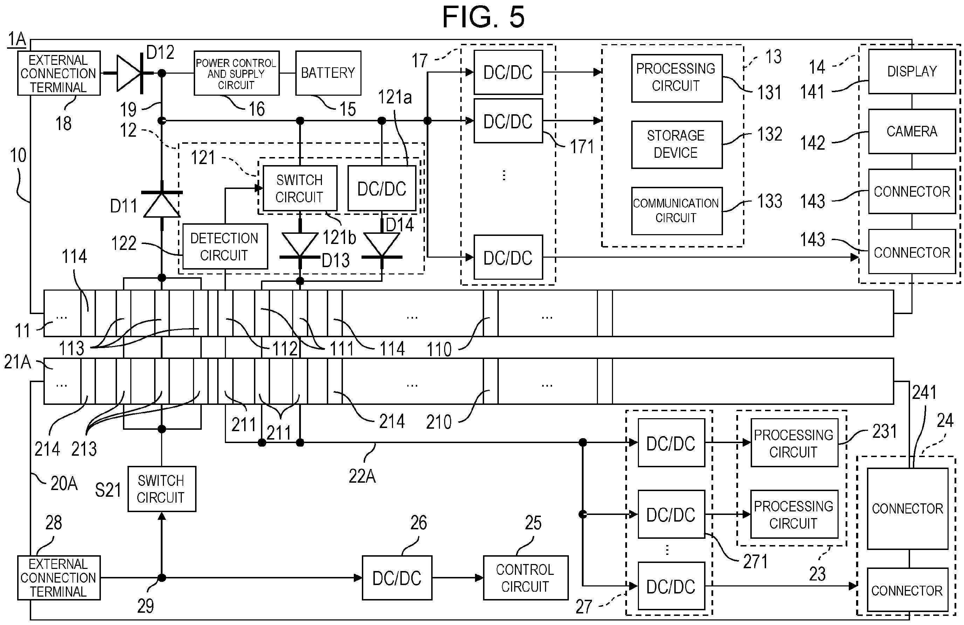

Figs. 1 and 5 are block diagrams respectively illustrating configuration examples of device systems 1, 1A each including electronic device 10 according to one embodiment. Device system 1 of Fig. 1 includes electronic device 10 and connecting device 20, and device system 1A of Fig. 5 includes electronic device 10 and connecting device 20A. Connecting device 20 and connecting device 20A can be alternatively connected to electronic device 10.

Electronic device 10 can be used alone. In the present exemplary embodiment, electronic device 10 is a tablet personal computer, but is not limited thereto. Examples of electronic device 10 include general electronic devices such as a laptop personal computer, a smartphone, a tablet terminal, a wearable device, and a game machine.

As illustrated in Fig. 1, electronic device 10 includes connector 11 and power feed circuit 12. Connector 11 has a plurality of first terminals 110. The plurality of first terminals 110 are connected to respective ones of a plurality of second terminals 210 of connecting device 20, 20A. The plurality of first terminals 110 include: one or more power supply terminals 111 (two in Fig. 1) to supply direct-current power to connecting device 20; and detection terminal 112. When connecting device 20 is connected to connector 11, power feed circuit 12 determines whether second terminal 210, among the plurality of second terminals 210, connected to detection terminal 112 is a specific terminal, and supplies direct-current supply power having a voltage value determined based on a result of the determination to connecting device 20 via one or more power supply terminals 111 of connector 11.

Electronic device 10 includes detection terminal 112 in connector 11 to be connected to connecting device 20 or connecting device 20A, and determines the voltage value of the direct-current supply power to be supplied to connecting device 20, 20A on the basis of a result of the determination whether second terminal 210 connected to detection terminal 112 is the specific terminal. With the present exemplary embodiment, the voltage value of the direct-current supply power supplied from electronic device 10 to the connecting device (connecting device 20 or connecting device 20A) can be set to a value corresponding to the connecting device (connecting device 20 or connecting device 20A).

Connecting device 20 and connecting device 20A are connected to electronic device 10. Connecting device 20 and connecting device 20A are used more effectively in a state of being connected to electronic device 10 than in a state of being alone. Connecting device 20 and connecting device 20A correspond to peripheral devices when electronic device 10 is a main body. Connecting device 20 and connecting device 20A are each, for example, a port replicator (in some cases, also referred to as a cradle or a docking station). In the present exemplary embodiment, connecting device 20 and connecting device 20A are the same type of devices (a port replicator in the present exemplary embodiment), but connecting device 20 is a new model and connecting device 20A is an old model. As an example, connecting device 20 can use direct-current supply power higher than direct-current supply power used by connecting device 20A. In the present exemplary embodiment, connecting device 20 and connecting device 20A are port replicators, but the present invention is not limited thereto. An example of connecting device 20 may be a peripheral device that can be connected to a general electronic device such as a personal computer, a smartphone, a tablet terminal, a wearable device, or a game machine. Examples of the peripheral device include an input and output device such as a pointing device (keyboard, mouse, or the like), a display device (display, projector, or the like), an acoustic device (speaker, sound bar, or the like.), and a communication device (antenna).

As illustrated in Fig. 1, connecting device 20 has the plurality of second terminals 210 to be connected to respective ones of the plurality of first terminals 110 of connector 11 of electronic device 10. The plurality of second terminals 210 include: one or more input terminals 211 that are connected to one or more power supply terminals 111 and receive the direct-current supply power from electronic device 10; and identification terminal 212 that is electrically separated from the one or more input terminals 211 and is connected, as the specific terminal, to detection terminal 112.

As described above, connecting device 20 includes, as the plurality of second terminals 210 to be connected to electronic device 10, identification terminal 212 that is connected, as the specific terminal, to detection terminal 112. With the present exemplary embodiment, a voltage value of the direct-current supply power supplied from electronic device 10 to connecting device 20 can be set to a value corresponding to connecting device 20.

### [1.2 Details]

Hereinafter, device system 1 will be described with reference to Figs. 1 to 7. As illustrated in Fig. 1, device system 1 includes electronic device 10 and connecting device 20.

### [1.2.1 Electronic device]

As illustrated in Fig. 1, electronic device 10 includes connector 11, power feed circuit 12, processor 13, input and output unit 14, battery 15, power control and supply circuit 16, power conversion circuit 17, external connection terminal 18, and power feed path 19.

Connector 11 is used for connection between electronic device 10 and connecting device 20 or connecting device 20A. That is, connector 11 enables connecting device 20 or connecting device 20A to be connected to electronic device 10.

As illustrated in Fig. 1, connector 11 includes the plurality of first terminals 110. The plurality of first terminals 110 include one or more (two in Fig. 1) power supply terminals 111, detection terminal 112, one or more (three in Fig. 1) power reception terminals 113, and a pair of ground terminals 114. The power supply terminals 111 are used to supply direct-current supply power having a voltage value corresponding to connecting device 20 to connecting device 20. Detection terminal 112 is used to detect a type of connecting device 20. Power reception terminals 113 are used to receive direct-current power having a specified voltage value from connecting device 20. The specified voltage value is, for example, 16 V. Furthermore, the plurality of first terminals 110 may include: one or more terminals to detect connection of connecting device 20 or connecting device 20A; one or more terminals to detect connection of electronic device 10; one or more terminals for communication; and a plurality of other ground terminals. Examples of the terminals for communication include a terminal for universal asynchronous receiver-transmitter (UART) communication or universal serial bus (USB) communication.

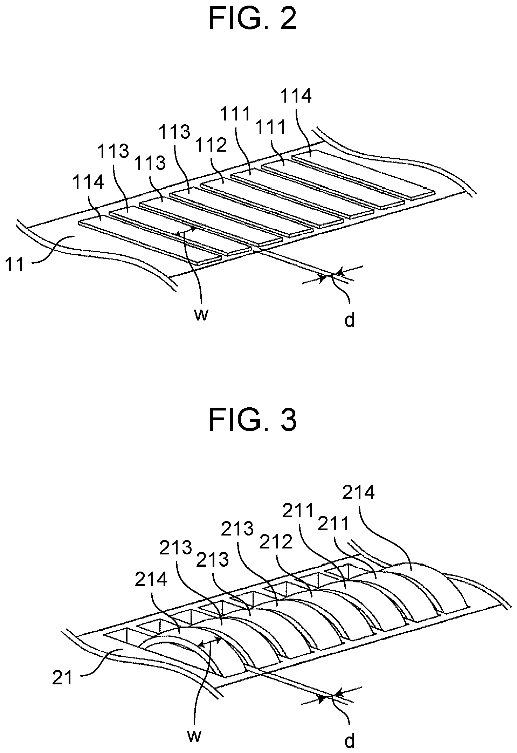

Fig. 2 is a schematic diagram of a configuration example of connector 11 of electronic device 10 of Fig. 1 with, a part of connector 11 omitted. Fig. 2 illustrates, among the plurality of first terminals 110, two power supply terminals 111, detection terminal 112, three power reception terminals 113, and two ground terminals 114. Two power supply terminals 111, detection terminal 112, three power reception terminals 113, and the pair of ground terminals 114 are contact terminals having such a shape that causes the contact terminals to be connected to their corresponding second terminals 210 by contact. In the present exemplary embodiment, two power supply terminals 111, detection terminal 112, three power reception terminals 113, and the pair of ground terminals 114 have a rectangular flat plate shape. Two power supply terminals 111, detection terminal 112, three power reception terminals 113, and two ground terminals 114 are arranged in a row. Width directions (left-right direction in Fig. 2) of power supply terminals 111, detection terminal 112, and power reception terminals 113 coincide with a direction (left-right direction in Fig. 2) in which power supply terminals 111, detection terminal 112, and power reception terminals 113 are arranged. An interval d between power supply terminals 111, detection terminal 112, and power reception terminals 113 is narrower than a width w of power supply terminals 111, detection terminal 112, and power reception terminals 113.

More specifically, two power supply terminals 111, detection terminal 112, and three power reception terminals 113 are arranged in a row such that detection terminal 112 is positioned between two power supply terminals 111 and three power reception terminals 113. As described above, the plurality of first terminals 110 includes the pair of ground terminals 114, and the pair of ground terminals 114 are located on both sides of the following terminals arranged in a row: two power supply terminals 111, detection terminal 112, and three power reception terminals 113.

In the present exemplary embodiment, all of first terminals 110 are contact terminals having such a shape that causes the contact terminals to be connected to their corresponding second terminals 210 by contact, the width directions of all of first terminals 110 coincide with the direction in which first terminals 110 are arranged, and the interval d between first terminals 110 is narrower than the width w of each of first terminals 110.

External connection terminal 18 is used to connect an external power supply to electronic device 10. The external power supply is, for example, an AC adapter that converts AC power from a commercial AC power source into direct-current power having the specified voltage value. As described above, the specified voltage value is, for example, 16 V.

Power feed path 19 is used, inside electronic device 10, to transmit the direct-current power having the specified voltage value. Power feed path 19 is coupled to power reception terminals 113 of connector 11 and external connection terminal 18. Therefore, power feed path 19 can receive the direct-current power having the specified voltage value from power reception terminals 113 of connector 11 and from external connection terminal 18. As illustrated in Fig. 1, power feed path 19 is provided with: diode D11 to prevent backflow from power feed path 19 to power reception terminals 113; and diode D12 to prevent backflow from power feed path 19 to external connection terminal 18.

Processor 13 and input and output unit 14 determine a function of electronic device 10. In other words, configurations of processor 13 and input and output unit 14 are determined in accordance with a function required for electronic device 10. That is, processor 13 and input and output unit 14 are appropriately selected in accordance with a function required for electronic device 10. With reference to Fig. 1, processor 13 includes processing circuit 131, storage device 132, and communication circuit 133. However, processor 13 is not limited thereto. Processing circuit 131 includes a circuit element that is capable of executing specific processing and is, for example, a central processing unit (CPU), a microcomputer, a HUB, or a video conversion IC. Storage device 132 includes a secondary storage device such as a hard disk, a solid state drive (SSD), a compact disc read only memory (CD-ROM), or a non-transitory computer readable storage device, in other forms, such as a random access memory (RAM) or a read only member (ROM). Communication circuit 133 includes a module for wireless communication or the like. With reference to Fig. 1, input and output unit 14 includes display 141, camera 142, and connectors 143. However, input and output unit 14 is not limited thereto. Examples of connector 143 include a connector for a local area network (LAN) cable and a connector conforming to the USB standard.

Battery 15 is used to make electronic device 10 operate. Battery 15 can be charged and discharged. In the present exemplary embodiment, battery 15 is detachable. Therefore, in some cases, electronic device 10 does not include battery 15 as a component.

Power control and supply circuit 16 controls charging and discharging of battery 15. Power control and supply circuit 16 charges battery 15, based on the direct-current power having the specified voltage value and obtained from power feed path 19. Power control and supply circuit 16 converts direct-current power from battery 15 into the direct-current power having the specified voltage value and supplies the converted power to power feed path 19.

Based on the direct-current power having the specified voltage value and obtained from power feed path 19, power conversion circuit 17 generates direct-current power having a voltage value (for example, 5 V) required for processor 13, and outputs the generated direct-current power to processor 13. Power conversion circuit 17 generates, based on the direct-current power having the specified voltage value and obtained from power feed path 19, direct-current power having a voltage value (for example, 5 V, 9 V, or 15 V) required for input and output unit 14, and outputs the generated direct-current power to input and output unit 14. In the present exemplary embodiment, power conversion circuit 17 includes a plurality of DC/DC converters 171 to be capable of dealing with different voltage values required for processor 13 and input and output unit 14. In Fig. 1 and other diagrams, the "DC/DC converter" is simply referred to as "DC/DC" for simplification of the drawings.

Power feed circuit 12 is used to supply direct-current supply power having a voltage value corresponding to each of connecting device 20 or connecting device 20A, from electronic device 10 to connecting device 20 or connecting device 20A. Power feed circuit 12 supplies the direct-current supply power to connecting device 20 or connecting device 20A connected to connector 11, based on the direct-current power having the specified voltage value and obtained from power feed path 19.

Power feed circuit 12 can select a voltage value of direct-current supply power from a first voltage value and a second voltage value. The first voltage value is smaller than the specified voltage value. The first voltage value is, for example, 5 V. The second voltage value is larger than the first voltage value. The second voltage value is, for example, equal to the specified voltage value. In the present exemplary embodiment, the first voltage value corresponds to the voltage value of the direct-current supply power to be supplied to connecting device 20A, and the second voltage value corresponds to the voltage value of the direct-current supply power to be supplied to connecting device 20. Power feed circuit 12 sets the voltage value of the direct-current supply power to the first voltage value when second terminal 210 connected to detection terminal 112 is not the specific terminal, and power feed circuit 12 sets the voltage value of the direct-current supply power to the second voltage value when second terminal 210 connected to detection terminal 112 is the specific terminal. Here, the specific terminal is one of the plurality of second terminals 210 and is included in connecting device 20 but is not included in connecting device 20A. In the present exemplary embodiment, identification terminal 212 included in connecting device 20 is used as the specific terminal. Power feed circuit 12 determines whether second terminal 210 connected to detection terminal 112 is the specific terminal on the basis of a voltage value of detection terminal 112.

In order to realize an operation of setting the voltage value on the basis of whether the terminal is the specific terminal or not, power feed circuit 12 includes voltage switch circuit 121 and detection circuit 122 as illustrated in Fig. 1.

Voltage switch circuit 121 switches the voltage value of the direct-current supply power output from power supply terminals 111 of connector 11 between the first voltage value and the second voltage value. Voltage switch circuit 121 of Fig. 1 includes DC/DC converter 121a and switch circuit 121b. DC/DC converter 121a generates, based on the direct-current power having the specified voltage value and obtained from power feed path 19, direct-current supply power having the first voltage value, and outputs the generated direct-current supply power to power supply terminals 111. Switch circuit 121b is connected between power feed path 19 and power supply terminals 111. In voltage switch circuit 121, when switch circuit 121b is turned off, the voltage value of the direct-current supply power becomes the first voltage value, and when switch circuit 121b is turned on, the voltage value of the direct-current supply power becomes the second voltage value. As illustrated in Fig. 1, power feed circuit 12 includes diode D13 to prevent backflow from power supply terminals 111 to switch circuit 121b of voltage switch circuit 121, and diode D14 for preventing backflow from power supply terminals 111 to DC/DC converter 121a of voltage switch circuit 121.

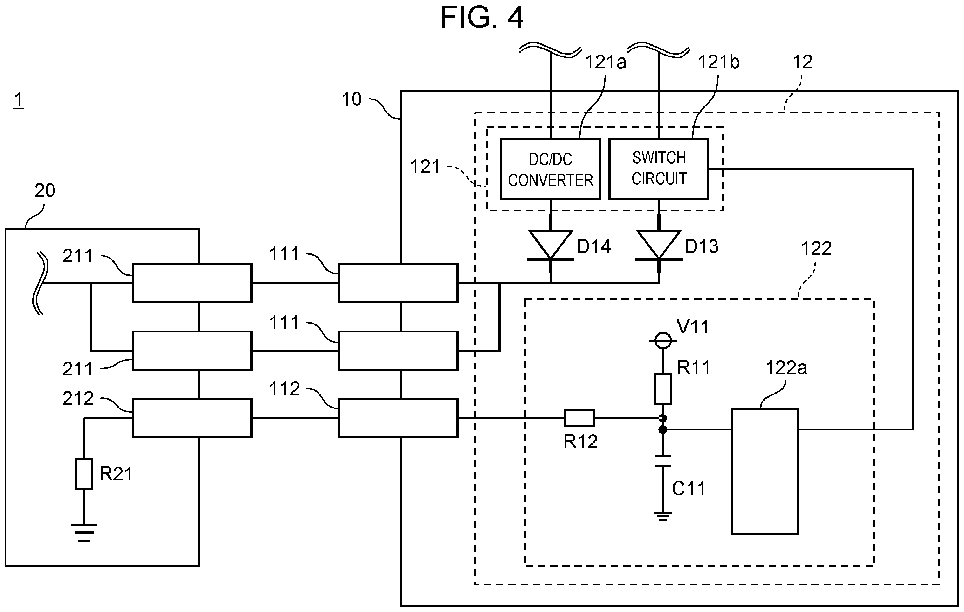

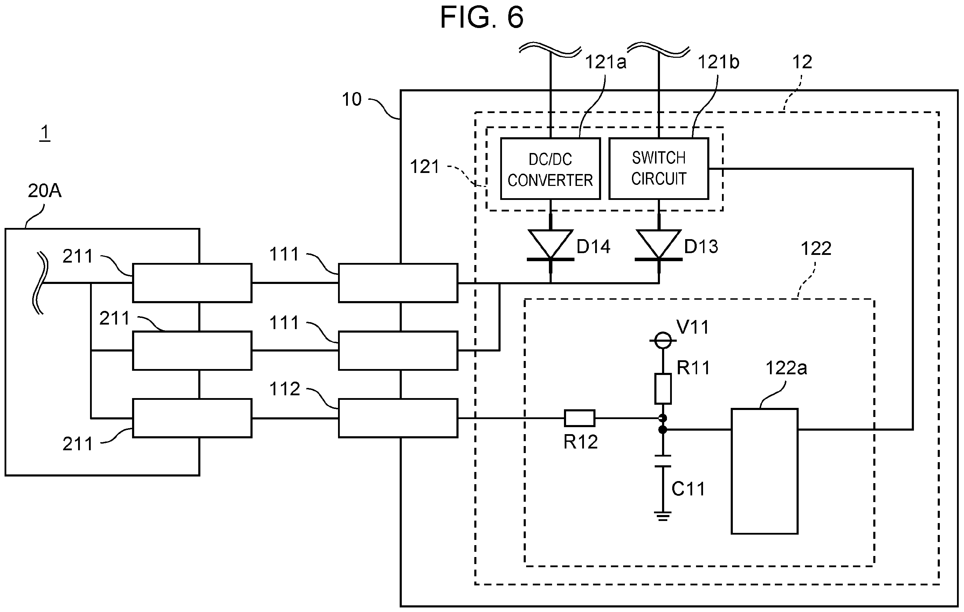

Detection circuit 122 detects a voltage applied to detection terminal 112. Detection circuit 122 controls voltage switch circuit 121 on the basis of the voltage value of detection terminal 112 and switches the voltage value of the direct-current supply power. In more detail, detection circuit 122 switches on and off of switch circuit 121b of voltage switch circuit 121 on the basis of the voltage value of detection terminal 112. As illustrated in Figs. 4 and 6, detection circuit 122 includes control circuit 122a, resistors R11, R12, and capacitor C11. A series circuit of resistor R11 and capacitor C11 is connected between internal power supply V11 and a ground. Internal power supply V11 is, for example, an arbitrary one of DC/DC converters 171 of power conversion circuit 17. Resistor R12 is connected between a connection point between resistor R11 and capacitor C11 and detection terminal 112. Control circuit 122a detects a voltage value of a voltage across capacitor C11 as the voltage value of the voltage applied to detection terminal 112. In the present exemplary embodiment, control circuit 122a compares the voltage value of detection terminal 112 with a threshold. The threshold is set to be larger than a voltage value between both ends of capacitor C11 when identification terminal 212 described later is connected to detection terminal 112, and is set to be smaller than the voltage value between both ends of capacitor C11 when detection terminal 112 is opened or when input terminals 211 is connected to detection terminal 112. Control circuit 122a turns off switch circuit 121b when the voltage value of detection terminal 112 is greater than or equal to the threshold, and turns on switch circuit 121b when the voltage value of detection terminal 112 is less than the threshold. Detection circuit 122 turns off switch circuit 121b in an initial state.

An operation of power feed circuit 12 will be described in more detail in the following section "1.3 Operation" with reference to Figs. 4, 6, and 7.

### [1.2.2 Connecting device]

Next, connecting device 20 and connecting device 20A will be described with reference to Figs. 1 and 5. As described above, in the present exemplary embodiment, connecting device 20 and connecting device 20A are port replicators, connecting device 20 is a new model, and connecting device 20A is an old model.

### [1.2.2.1 Connecting device 20]

As illustrated in Fig. 1, connecting device 20 includes connector 21, power feed path 22, processor 23, input and output unit 24, control circuit 25, power conversion circuits 26, 27, external connection terminal 28, and power feed path 29.

Connector 21 is used for connection with electronic device 10. As illustrated in Fig. 1, connector 21 includes the plurality of second terminals 210. The plurality of second terminals 210 include one or more (two in Fig. 1) input terminals 211, identification terminal 212, one or more (three in Fig. 1) output terminals 213, and a pair of ground terminals 214. Input terminals 211 are used to receive from electronic device 10 direct-current supply power having a voltage value (the above-described second voltage value) corresponding to connecting device 20. Identification terminal 212 is electrically separated from input terminals 211 and is connected, as the specific terminal, to detection terminal 112. Identification terminal 212 is used for electronic device 10 to identify a connecting device. In the present exemplary embodiment, identification terminal 212 is connected to the ground via resistor R21. Output terminals 213 are used to output the direct-current power having the specified voltage value to electronic device 10. Furthermore, the plurality of second terminals 210 may include: one or more terminals to detect connection of connecting device 20, 20A; one or more terminals to detect connection of electronic device 10; one or more terminals for communication; and a plurality of other ground terminals. Examples of the terminals for communication include a terminal for UART communication or USB communication. In the present exemplary embodiment, since connecting device 20 is a port replicator, connector 21 may have a structure to mechanically hold electronic device 10.

Fig. 3 is a schematic diagram of a configuration example of connector 21 of connecting device 20 of Fig. 1, with a part of connector 21 omitted. Fig. 3 illustrates, among the plurality of first terminals 110, two input terminals 211, identification terminal 212, three output terminals 213, and two ground terminals 214. Two input terminals 211, identification terminal 212, three output terminals 213, and the pair of ground terminals 214 are contact terminals having such a shape that causes the contact terminals to be connected to their corresponding first terminals 110 by contact. In the present exemplary embodiment, two input terminals 211, identification terminal 212, three output terminals 213, and the pair of ground terminals 214 are chevron-shaped spring terminals in side view. Therefore, two input terminals 211, identification terminal 212, three output terminals 213, and the pair of ground terminals 214 are respectively in contact with two power supply terminals 111, detection terminal 112, three power reception terminals 113, and the pair of ground terminals 114, with a predetermined contact pressure, so that a contact state therebetween is preferably maintained. Two input terminals 211, identification terminal 212, three output terminals 213, and the pair of ground terminals 214 have a rectangular shape in plan view. Two input terminals 211, identification terminal 212, three output terminals 213, and two ground terminals 214 are arranged in a row. A width direction (left-right direction in Fig. 3) of input terminals 211, identification terminal 212, and output terminals 213 coincides with a direction (left-right direction in Fig. 3) in which input terminal 211, identification terminal 212, and the output terminals 213 are arranged. An interval d between input terminals 211, identification terminal 212, and output terminals 213 is narrower than a width w of input terminals 211, identification terminal 212, and output terminals 213.

As illustrated in Fig. 3, identification terminal 212 is adjacent to one or more input terminals 211. In more detail, two input terminals 211, identification terminal 212, and three output terminals 213 are arranged in a row such that identification terminal 212 is located between two input terminals 211 and three output terminals 213. As described above, the plurality of second terminals 210 includes the pair of ground terminals 214, and the pair of ground terminals 214 are located on both sides of the following terminals arranged in a row: two input terminals 211, identification terminal 212, and three output terminals 213.

In the present exemplary embodiment, all of second terminals 210 are contact terminals having such a shape that causes the contact terminals to be connected to their corresponding first terminals 110 by contact, the width directions of all of second terminals 210 coincide with the direction in which second terminals 210 are arranged, and the interval d between second terminals 210 is narrower than the width w of each of second terminals 210. Since connector 11 of electronic device 10 and connector 21 of connecting device 20 are connected to each other, the width w of second terminal 210 and the interval d of second terminal 210 respectively coincide with the width w of the first terminals 110 and the interval d of the first terminals 110.

External connection terminal 28 is used to connect an external power supply to connecting device 20. The external power supply is, for example, an AC adapter that converts AC power from a commercial AC power source into direct-current power having the specified voltage value. As described above, the specified voltage value is, for example, 16 V.

Power feed path 22 is an electric path that transmits, inside connecting device 20, direct-current supply power supplied from electronic device 10. Power feed path 22 is connected to input terminals 211 of connector 21. Therefore, power feed path 22 can receive direct-current supply power from input terminals 211 of connector 21. In the present exemplary embodiment, electronic device 10 supplies direct-current supply power having the second voltage value to connecting device 20. Therefore, power feed path 22 is an electric path that transmits, inside connecting device 20, the direct-current supply power having the second voltage value supplied from electronic device 10.

Power feed path 29 is an electric path that transmits, inside connecting device 20, direct-current power having the specified voltage value. Power feed path 29 is connected to external connection terminal 28. Therefore, power feed path 29 can receive the direct-current power having the specified voltage value from external connection terminal 28.

As illustrated in Fig. 1, power feed path 22 is connected to power feed path 29 via diode D22 to prevent backflow from power feed path 29 to power feed path 22. As illustrated in Fig. 1, on power feed path 29, switch circuit S21 is connected between external connection terminal 28 and output terminals 213. Power feed path 29 is provided with diode D21 to prevent backflow so that a current from power feed path 22 does not flow into switch circuit S21.

Processor 23 and input and output unit 24 determine a function of connecting device 20. Processor 23 and input and output unit 24 are appropriately selected in accordance with a function required for connecting device 20. With reference to Fig. 1, processor 23 includes a plurality of processing circuits 231. However, processor 23 is not limited to this configuration. Processing circuits 231 each include a circuit element that is capable of executing specific processing and is, for example, a CPU, a microcomputer, a HUB, or a video conversion IC. With reference to Fig. 1, input and output unit 24 includes connectors 241. However, input and output unit 24 is not limited to this configuration. Examples of connector 241 include an HDMI (registered trademark) connector and a connector conforming to the USB standard.

Control circuit 25 controls switch circuit S21. Control circuit 25 turns on switch circuit S21 when the connection of electronic device 10 is detected in a case where the direct-current power having the specified voltage value is received from an external power supply via external connection terminal 28. As a result, external connection terminal 28 is coupled to electronic device 10 through output terminals 213 of connector 21, and the direct-current power having the specified voltage value is supplied to electronic device 10 from the external power supply connected to external connection terminal 28. The connection of electronic device 10 is detected by using one or more terminals that are included in second terminals 210 of connector 21 and detect the connection of electronic device 10.

Power conversion circuit 26 generates, based on the direct-current power having the specified voltage value and obtained from power feed path 29, direct-current power having a voltage value necessary for an operation of control circuit 25, and power conversion circuit 26 outputs the generated direct-current power to control circuit 25. Power conversion circuit 26 includes, for example, a DC/DC converter.

Power conversion circuit 27 generates, based on the direct-current power having the specified voltage value and obtained from power feed path 22, direct-current power having a voltage value (for example, 5 V) required for processor 23, and outputs the generated direct-current power to processor 23. Power conversion circuit 27 generates, based on the direct-current power having the specified voltage value and obtained from power feed path 22, direct-current power having a voltage value (for example, 5 V, 9 V, or 15 V) required for input and output unit 24, and outputs the generated direct-current power to input and output unit 24. In the present exemplary embodiment, power conversion circuit 27 includes a plurality of DC/DC converters 271 to be capable of dealing with different voltage values required for processor 23 and input and output unit 24.

### [1.2.2.2 Connecting device 20A]

As illustrated in Fig. 5, connecting device 20A includes connector 21A, power feed path 22A, processor 23, input and output unit 24, control circuit 25, power conversion circuits 26, 27, external connection terminal 28, and power feed path 29. Connector 21A and power feed path 22A of connecting device 20A are different from connector 21 and power feed path 22 of connecting device 20.

Connector 21A is used for connection with electronic device 10. As illustrated in Fig. 5, connector 21A includes a plurality of second terminals 210. The plurality of second terminals 210 includes one or more (three in Fig. 5) input terminals 211, one or more (three in Fig. 1) output terminals 213, and a pair of ground terminals 214, but does not include identification terminal 212 unlike connector 21. In more detail, connector 21A has input terminal 211 at a position, where identification terminal 212 is located in a case of connector 21; therefore, the number of input terminals 211 is larger than in the case of connector 21.

Power feed path 22A is an electric path that transmits, inside connecting device 20, direct-current supply power supplied from electronic device 10. Power feed path 22A is connected to input terminals 211 of connector 21. Therefore, power feed path 22A can receive direct-current supply power from input terminals 211 of connector 21. In the present exemplary embodiment, electronic device 10 supplies the direct-current supply power having the first voltage value to connecting device 20. Therefore, power feed path 22A is an electric path that transmits, inside connecting device 20, the direct-current supply power having the first voltage value supplied from electronic device 10. As illustrated in Fig. 5, unlike power feed path 22, power feed path 22A is not coupled to power feed path 29. However, power feed path 22A supplies power in power conversion circuit 26.

### [1.3 Operation]

Next, the operation of power feed circuit 12 when connecting device 20 or connecting device 20A is connected to electronic device 10 will be described with reference to Figs. 4, 6, and 7. Since Fig. 4 is for describing the operation of power feed circuit 12, parts of electronic device 10 and connecting device 20 are omitted. Similarly, since Fig. 6 is for describing the operation of power feed circuit 12, parts of electronic device 10 and connecting device 20A are omitted.

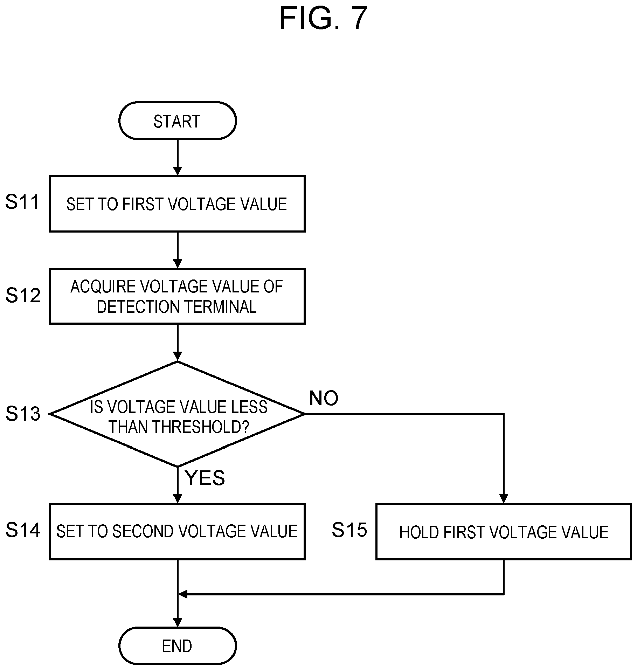

When neither connecting device 20 nor connecting device 20A is connected to connector 11 of electronic device 10, detection circuit 122 of power feed circuit 12 turns off switch circuit 121b of voltage switch circuit 121. As a result, the voltage value of the direct-current supply power that can be supplied from power supply terminals 111 is set to the first voltage value (step S11 in Fig. 7).

As illustrated in Fig. 4, when connecting device 20 is connected to electronic device 10, detection circuit 122 acquires the voltage value of detection terminal 112 (step S12 of Fig. 7), and determines whether the voltage value of detection terminal 112 is less than the threshold (step S13 of Fig. 7). When connecting device 20 is connected to electronic device 10, detection terminal 112 of connector 11 is connected to identification terminal 212 of connector 21. As a result, resistor R12 of detection circuit 122 is coupled to resistor R21 via detection terminal 112 and identification terminal 212, and is coupled to the ground. As a result, a voltage obtained by dividing the voltage of internal power supply V11 by a voltage divider circuit including a series circuit of resistors R11, R12, R21 is applied to capacitor C11. Control circuit 122a of detection circuit 122 detects the voltage value of the voltage across capacitor C11 as the voltage value of the voltage applied to detection terminal 112. Control circuit 122a compares the voltage value of detection terminal 112 with the threshold. As described above, the threshold is set to be larger than the voltage value between both ends of capacitor C1 when identification terminal 212 is connected to detection terminal 112, and is set to be smaller than the voltage value between both ends of capacitor C1 when detection terminal 112 is opened or when input terminal 211 is connected to detection terminal 112. Therefore, control circuit 122a determines that the voltage value of detection terminal 112 is less than the threshold (step S13 of Fig. 7: YES). In this case, control circuit 122a turns on switch circuit 121b; therefore, the voltage value of the direct-current supply power that can be supplied from power supply terminals 111 is set to the second voltage value (step S14 of Fig. 7).

As illustrated in Fig. 6, when not connecting device 20 but connecting device 20A is connected to electronic device 10, detection circuit 122 acquires the voltage value of detection terminal 112 (step S12 of Fig. 7), and determines whether the voltage value of detection terminal 112 is less than the threshold (step S13 of Fig. 7). When connecting device 20A is connected to electronic device 10, detection terminal 112 of connector 11 is connected to input terminal 211 of connector 21 A. Since input terminals 211 are connected to power supply terminals 111 of connector 11, a voltage from voltage switch circuit 121 is applied to detection terminal 112. As a result, the voltage from voltage switch circuit 121 is applied to capacitor C11. Control circuit 122a of detection circuit 122 detects the voltage value of the voltage across capacitor C11 as the voltage value of the voltage applied to detection terminal 112. Control circuit 122a compares the voltage value of detection terminal 112 with the threshold. As described above, the threshold is set to be larger than the voltage value between both ends of capacitor C1 when identification terminal 212 is connected to detection terminal 112, and is set to be smaller than the voltage value between both ends of capacitor C1 when detection terminal 112 is opened or when input terminal 211 is connected to detection terminal 112. Therefore, control circuit 122a determines that the voltage value of detection terminal 112 is greater than or equal to the threshold (step S13 of Fig. 7: NO). In this case, control circuit 122a holds an off state of switch circuit 121b; therefore, the voltage value of the direct-current supply power that can be supplied from power supply terminals 111 is set to the first voltage value (step S15 of Fig. 7).

As described above, power feed circuit 12 performs a control method for supplying a direct-current supply power from electronic device 10 to connecting device 20 or connecting device 20A connected to electronic device 10. This control method includes determining, when a connecting device (connecting device 20 or connecting device 20A) is connected to connector 11, whether second terminal 210, among the plurality of second terminals 210, connected to detection terminal 112 is the specific terminal. The control method includes supplying the direct-current supply power having the voltage value determined based on the result of the determining to the connecting device (connecting device 20 or connecting device 20A) via one or more power supply terminals 111 of connector 11. Therefore, with the present exemplary embodiment, the voltage value of the direct-current supply power supplied from electronic device 10 to the connecting device (connecting device 20 or connecting device 20A) can be set to the value corresponding to the connecting device (connecting device 20 or connecting device 20A).

### [1.4 Configuration of connector]

As described above, connector 11 of electronic device 10 includes the plurality of first terminals 110. As illustrated in Fig. 2, the plurality of first terminals 110 includes two power supply terminals 111, detection terminal 112, and three power reception terminals 113. Here, power supply terminals 111 are used to feed power to the connecting device (connecting device 20 or connecting device 20A). Therefore, it is preferable that the following terminals be not in contact with power supply terminals 111: first terminals 110 that are used for another power feed like power reception terminals 113 of connector 11; or second terminals 210 not corresponding to power supply terminals 111. In the present exemplary embodiment, as illustrated in Fig. 2, detection terminal 112 is adjacent to one or more power supply terminals 111. Detection terminal 112 is not used to feed power to the connecting device (connecting device 20 or connecting device 20A). Therefore, it is possible to use detection terminal 112 in order to prevent that first terminals 110 used for another power feed or second terminals 210 not corresponding to power supply terminals 111 come into contact with power supply terminals 111 and thereby cause short-circuiting; therefore, it is possible to reduce a possibility of occurrence of a failure due to short-circuiting of power supply terminals 111. In particular, detection terminal 112 is located between two power supply terminals 111 and three power reception terminals 113. This configuration makes it possible to increase a distance between power reception terminals 113 and power supply terminals 111. For example, even when power reception terminals 113 are damaged and displaced toward power supply terminals 111, the presence of detection terminal 112 can prevent power reception terminals 113 from reaching power supply terminals 111; therefore, it is possible to reduce a possibility that power reception terminals 113 and power supply terminals 111 are directly or indirectly short-circuited. Also when power supply terminals 111 are damaged, it is similarly possible to reduce the possibility that power reception terminals 113 and power supply terminals 111 are directly or indirectly short-circuited. As described above, in connector 11, the distance between power reception terminals 113 and power supply terminals 111 can be increased, so that it is possible to reduce the possibility that power reception terminals 113 and power supply terminals 111 are directly or indirectly short-circuited due to a failure of connector 11 or the like.

As described above, connector 21 of connecting device 20 includes the plurality of second terminals 210. As illustrated in Fig. 3, the plurality of second terminals 210 includes two input terminals 211, identification terminal 212, and three output terminals 213. Here, input terminals 211 are used to feed power to connecting device 20. Therefore, it is preferable that the following terminals be not in contact with input terminals 211: second terminals 210 that are used for another power feed like output terminals 213 of connector 21; or first terminals 110 that do not correspond to input terminals 211. Therefore, as illustrated in Fig. 3, identification terminal 212 is adjacent to one or more input terminals 211. Identification terminal 212 is not used to feed power to connecting device 20. Therefore, it is possible to use identification terminal 212 in order to prevent that second terminals 210 used for another power feed or first terminals 110 not corresponding to input terminals 211 come into contact with input terminals 211 and thereby cause short-circuiting; therefore, it is possible to reduce a possibility of occurrence of a failure due to short-circuiting of output terminals 213. In particular, identification terminal 212 is located between two input terminals 211 and three output terminals 213. This configuration makes it possible to increase a distance between output terminals 213 and input terminals 211. For example, even when output terminals 213 are damaged and displaced toward input terminals 211, the presence of identification terminal 212 can prevent output terminals 213 from reaching input terminals 211. As described above, in connector 21, the distance between output terminals 213 and input terminals 211 can be increased, so that it is possible to reduce a possibility that output terminals 213 and input terminals 211 are directly or indirectly short-circuited due to a defect of connector 21 or the like.

### [1.5 Advantageous effects and the like]

Electronic device 10 described above includes connector 11 and power feed circuit 12. Connector 11 includes the plurality of first terminals 110, and the plurality of first terminals 110 are connected to respective ones of the plurality of second terminals 210 of connecting device 20, 20A and include: one or more power supply terminals 111 to supply direct-current power to connecting device 20, 20A; and detection terminal 112. When connecting device 20, 20A is connected to connector 11, power feed circuit 12 determines whether second terminal 210, among the plurality of second terminals 210, connected to detection terminal 112 is the specific terminal. Power feed circuit 12 supplies the direct-current supply power having the voltage value determined based on the result of the determination to connecting device 20, 20A via one or more power supply terminals 111 of connector 11. With this configuration, the voltage value of the direct-current supply power supplied from electronic device 10 to the connecting device (connecting device 20 or connecting device 20A) can be set to the value corresponding to the connecting device (connecting device 20 or connecting device 20A).

In addition, detection terminal 112 is adjacent to one or more power supply terminals 111. This configuration makes it possible to use detection terminal 112 in order to prevent that first terminals 110 used for another power feed or second terminals 210 not corresponding to power supply terminals 111 come into contact with power supply terminals 111 and thereby cause short-circuiting; therefore, it is possible to reduce a possibility of occurrence of a failure due to short-circuiting of power supply terminals 111.

In addition, the plurality of first terminals 110 include one or more power reception terminals 113 for receiving the direct-current power having the specified voltage value from connecting device 20, 20A. One or more power supply terminals 111, detection terminal 112, and one or more power reception terminals 113 are arranged in a row such that detection terminal 112 is located between one or more power supply terminals 111 and one or more power reception terminals 113. With this configuration, the distance between power reception terminals 113 and power supply terminals 111 can be increased, so that it is possible to reduce the possibility that power reception terminals 113 and power supply terminals 111 are directly or indirectly short-circuited due to a failure of connector 11 or the like.

In addition, when second terminal 210 connected to detection terminal 112 is not the specific terminal, power feed circuit 12 sets the voltage value of the direct-current supply power to the first voltage value smaller than the specified voltage value, and when second terminal 210 connected to detection terminal 112 is the specific terminal, power feed circuit 12 sets the voltage value of the direct-current supply power to the second voltage value larger than the first voltage value. With this configuration, the voltage value of the direct-current supply power supplied from electronic device 10 to the connecting device (connecting device 20 or connecting device 20A) can be set to the value corresponding to the connecting device (connecting device 20 or connecting device 20A).

Furthermore, power feed circuit 12 determines whether second terminal 210 connected to detection terminal 112 is the specific terminal on the basis of the voltage value of detection terminal 112. With this configuration, the voltage value of the direct-current supply power supplied from electronic device 10 to the connecting device (connecting device 20 or connecting device 20A) can be set to the value corresponding to the connecting device (connecting device 20 or connecting device 20A).

In addition, electronic device 10 includes power feed path 19 that is connected to one or more power reception terminals 113 and supplies the direct-current power having the specified voltage value. Power feed circuit 12 supplies, based on the direct-current power having the specified voltage value and obtained from power feed path 19, the direct-current supply power to the connecting device (connecting device 20 or connecting device 20A) connected to connector 11. This configuration makes it possible to supply the direct-current supply power, depending on the connecting device (connecting device 20 or connecting device 20A).

In addition, power feed circuit 12 includes voltage switch circuit 121 and detection circuit 122. Voltage switch circuit 121 includes: DC/DC converter 121a that generates, based on the direct-current power having the specified voltage value and obtained from power feed path 19, the direct-current supply power having the first voltage value and outputs the generated direct-current supply power to one or more power supply terminals 111; and switch circuit 121b coupled between power feed path 19 and one or more power supply terminals 111. Detection circuit 122 detects a voltage applied to detection terminal 112. Detection circuit 122 switches switch circuit 121b between on and off on the basis of the voltage value of detection terminal 112. This configuration can simplify a configuration of power feed circuit 12.

In an initial state, detection circuit 122 turns off DC/DC converter 121a and switch circuit 121b. This configuration can achieve a state where a voltage of power supply terminals 111 is low; therefore, power consumption can be improved.

In addition, electronic device 10 includes power control and supply circuit 16 that charges and discharges battery 15 to make electronic device 10 operate. Power control and supply circuit 16 charges battery 15, based on the direct-current power having the specified voltage value and obtained from power feed path 19. With this configuration, even when there is no power feed from the connecting device (connecting device 20 or connecting device 20A), electronic device 10 can be operated by battery 15.

The plurality of first terminals 110 include the pair of ground terminals 114. The pair of ground terminals 114 is located on both sides of the following terminals arranged in a row: one or more power supply terminals 111, detection terminal 112, and one or more power reception terminals 113. This configuration can reduce a possibility that a failure of connector 11 or the like causes the following terminals to directly or indirectly come in contact with power reception terminals 113 and power supply terminals 111: first terminals 110 other than power reception terminals 113 and power supply terminals 111; or second terminals 210 not corresponding to power reception terminals 113 or power supply terminals 111.

Furthermore, one or more power supply terminals 111, detection terminal 112, and one or more power reception terminals 113 are contact terminals having such a shape that causes the contact terminals to be connected to their corresponding second terminals 210 by contact. This configuration makes it easy to connect electronic device 10 and the connecting device (connecting device 20 or connecting device 20A) to each other.

Furthermore, width directions of one or more power supply terminals 111, detection terminal 112, and one or more power reception terminals 113 coincide with a direction in which one or more power supply terminals 111, detection terminal 112, and one or more power reception terminals 113 are arranged. An interval between one or more power supply terminals 111, detection terminal 112, and one or more power reception terminals 113 is narrower than a width of one or more power supply terminals 111, detection terminal 112, and one or more power reception terminals 113. With this configuration, connector 11 can be configured to be compact, and, at the same time, the distance between power reception terminals 113 and power supply terminals 111 can be made large, so that it is possible to reduce the possibility that power reception terminals 113 and power supply terminals 111 are directly or indirectly short-circuited due to a failure of connector 11 or the like.

Connecting device 20 described above has the plurality of second terminals 210 to be connected to respective ones of the plurality of first terminals 110 of connector 11 of electronic device 10. The plurality of second terminals 210 include: one or more input terminals 211 connected to one or more power supply terminals 111 to receive the direct-current supply power from electronic device 10; and identification terminal 212 that is electrically separated from one or more input terminals 211 and is connected, as the specific terminal, to detection terminal 112. With this configuration, a voltage value of a direct-current supply power supplied from electronic device 10 to connecting device 20 can be set to a value corresponding to connecting device 20.

Device system 1 described above includes electronic device 10 and connecting device 20 connected to electronic device 10. Connecting device 20 has the plurality of second terminals 210 to be connected to respective ones of the plurality of first terminals 110 of connector 11 of electronic device 10. The plurality of second terminals 210 include: one or more input terminals 211 connected to one or more power supply terminals 111 to receive the direct-current supply power from electronic device 10; and identification terminal 212 that is electrically separated from one or more input terminals 211 and is connected, as the specific terminal, to detection terminal 112. With this configuration, a voltage value of a direct-current supply power supplied from electronic device 10 to connecting device 20 can be set to a value corresponding to connecting device 20.

The control method described above is a control method for supplying direct-current supply power from electronic device 10 to the connecting device (connecting device 20 or connecting device 20A) connected to electronic device 10. Electronic device 10 includes connector 11 that has the plurality of first terminals 110, and the plurality of first terminals 110 are connected to respective ones of the plurality of second terminals 210 of the connecting device (connecting device 20 or connecting device 20A). Connector 11 includes: one or more power supply terminals 111 to supply direct-current power to the connecting device (connecting device 20 or connecting device 20A); and detection terminal 112. The control method includes determining, when a connecting device (connecting device 20 or connecting device 20A) is connected to connector 11, whether second terminal 210, among the plurality of second terminals 210, connected to detection terminal 112 is the specific terminal. The control method includes supplying the direct-current supply power having the voltage value determined based on the result of the determining to the connecting device (connecting device 20 or connecting device 20A) via one or more power supply terminals 111 of connector 11. With this configuration, the voltage value of the direct-current supply power supplied from electronic device 10 to the connecting device (connecting device 20 or connecting device 20A) can be set to the value corresponding to the connecting device (connecting device 20 or connecting device 20A).

### [2. Variations]

The exemplary embodiment of the present disclosure is not limited to the above exemplary embodiment. The above exemplary embodiment can be variously modified depending on design and the like as long as an object of the present disclosure can be achieved. Variations of the above exemplary embodiment will be recited below. The variations to be described below can be applied in appropriate combination.

In one variation, electronic device 10 only needs to include at least connector 11 and power feed circuit 12, and does not necessarily include the followings: processor 13; input and output unit 14; battery 15; power control and supply circuit 16; power conversion circuit 17; external connection terminal 18; and power feed path 19.

In one variation, the plurality of first terminals 110 of connector 11 only needs to include at least one or more power supply terminals 111 and detection terminal 112. In connector 11, the numbers of power supply terminals 111, detection terminal 112, power reception terminals 113, and ground terminals 114 are not limited to the numbers exemplified in the above exemplary embodiment. The arrangement of the plurality of first terminals 110 in connector 11 is not limited to the example in the above exemplary embodiment. For example, detection terminal 112 does not need to be adjacent to one or more power supply terminals 111, and does not need to be disposed between power supply terminals 111 and power reception terminals 113.

In one variation, power feed circuit 12 is not limited to the configuration example of the above exemplary embodiment. For example, voltage switch circuit 121 is not limited to a configuration including DC/DC converter 121a and switch circuit 121b. For example, the second voltage value may be different from the specified voltage value, and in that case, voltage switch circuit 121 may include a plurality of DC/DC converters. The voltage switch circuit may be a switching power supply capable of adjusting a voltage value.

In one variation, power feed circuit 12 may select the voltage value of the direct-current supply power from three or more voltage values. In connecting device 20, by appropriately setting a resistance value of resistor R21, it is possible to identify a plurality of connecting devices 20 having identification terminal 212.

In one variation, connecting device 20 only needs to include at least connector 21, and does not necessarily include the followings: power feed path 22; processor 23; input and output unit 24; control circuit 25; power conversion circuits 26, 27; external connection terminal 28; and power feed path 29.

In one variation, the plurality of second terminals 210 of connector 21 only need to include at least one or more input terminals 211 and identification terminal 212. In connector 21, the numbers of input terminals 211, identification terminal 212, output terminals 213, and ground terminals 214 are not limited to the numbers exemplified in the above exemplary embodiment. The arrangement of the plurality of second terminals 210 in connector 21 is not limited to the example in the above exemplary embodiment. For example, identification terminal 212 does not need to be adjacent to one or more input terminals 211, and does not need to be disposed between input terminals 211 and output terminals 213.

### [3. Aspects]

As is apparent from the above exemplary embodiment and variations, the present disclosure includes the following aspects. In the following, reference marks are given in parentheses only to clarify the correspondence with the exemplary embodiment.

A first aspect is electronic device (10) including connector (11) and power feed circuit (12). Connector (11) includes a plurality of first terminals (110), and the plurality of first terminals (110) are connected to respective ones of a plurality of second terminals (210) of connecting device (20, 20A) and include: one or more power supply terminals (111) to supply direct-current power to connecting device (20, 20A); and detection terminal (112). Power feed circuit (12) performs, when connecting device (20, 20A) is connected to connector (11), a determination whether second terminal (210), among the plurality of second terminals (210), connected to detection terminal (112) is a specific terminal. Power feed circuit (12) supplies direct-current supply power having a voltage value determined based on a result of the determination to connecting device (20, 20A) via one or more power supply terminals (111) of connector (11). With this aspect, the voltage value of the direct-current supply power supplied from electronic device (10) to connecting device (20, 20A) can be set to a value corresponding to connecting device (20, 20A).

A second aspect is electronic device (10) based on the first aspect. In the second aspect, the detection terminal (112) is adjacent to the one or more power supply terminals (111). This aspect makes it possible to use detection terminal (112) in order to prevent that first terminals (110) used for another power feed or second terminals (210) not corresponding to power supply terminals (111) come into contact with power supply terminals (111) and thereby cause short-circuiting; therefore, it is possible to reduce a possibility of occurrence of a failure due to short-circuiting of power supply terminals (111).

A third aspect is electronic device (10) based on the first or second aspect. In the third aspect, the plurality of first terminals (110) include one or more power reception terminals (113) that receive direct-current power having a specified voltage value from connecting device (20, 20A). One or more power supply terminals (111), detection terminal (112), and one or more power reception terminals (113) are arranged in a row, and detection terminal (112) is located between one or more power supply terminals (111) and one or more power reception terminals (113). With this aspect, the distance between power reception terminals (113) and power supply terminals (111) can be increased, so that it is possible to reduce a possibility that power reception terminals (113) and power supply terminals (111) are directly or indirectly short-circuited due to a failure of connector (11) or the like.

A fourth aspect is electronic device (10) based on the third aspect. In the fourth aspect, when second terminal (210) connected to detection terminal (112) is not the specific terminal, power feed circuit (12) sets the voltage value of the direct-current supply power to a first voltage value smaller than the specified voltage value, and when second terminal (210) connected to detection terminal (112) is the specific terminal, power feed circuit (12) sets the voltage value of the direct-current supply power to a second voltage value larger than the first voltage value. With this aspect, the voltage value of the direct-current supply power supplied from electronic device (10) to connecting device (20, 20A) can be set to a value corresponding to connecting device (20, 20A).

A fifth aspect is electronic device (10) based on the fourth aspect. In a fifth aspect, based on a voltage value of detection terminal (112), power feed circuit (12) determines whether second terminal (210) connected to detection terminal (112) is the specific terminal. With this aspect, the voltage value of the direct-current supply power supplied from electronic device (10) to connecting device (20, 20A) can be set to a value corresponding to connecting device (20, 20A).

A sixth aspect is electronic device (10) based on the fifth aspect. In the sixth aspect, the electronic device (10) includes power feed path (19) that is connected to one or more power reception terminals (113) and receives the direct-current power having the specified voltage value. Based on the direct-current power having the specified voltage value and obtained from power feed path (19), power feed circuit (12) supplies the direct-current supply power to connecting device (20, 20A) connected to connector (11). This aspect can simplify a configuration of power feed circuit (12).

A seventh aspect is electronic device (10) based on the sixth aspect. In the seventh aspect, the power feed circuit (12) includes voltage switch circuit (121) and detection circuit (122). Voltage switch circuit (121) includes: DC/DC converter (121a) that generates, based on the direct-current power having the specified voltage value and obtained from power feed path (19), the direct-current supply power having the first voltage value and outputs the generated direct-current supply power to one or more power supply terminals (111); and switch circuit (121b) connected between power feed path (19) and one or more power supply terminals (111). Detection circuit (122) detects a voltage applied to the detection terminal (112). Detection circuit (122) switches on and off of switch circuit (121b), based on a voltage value of detection terminal (112). This aspect can simplify the configuration of power feed circuit (12).

An eighth aspect is electronic device (10) based on the seventh aspect. In the eighth aspect, detection circuit (122) turns off DC/DC converter (121a) and switch circuit (121b) in an initial state. This aspect can achieve a state where a voltage of power supply terminals (111) is low; therefore, power consumption can be improved.

A ninth aspect is electronic device (10) based on any one of the sixth to eighth aspects. In the ninth aspect, electronic device (10) includes power control and supply circuit (16) that charges and discharges battery (15) to make electronic device (10) operate. Power control and supply circuit (16) charges battery (15), based on the direct-current power having the specified voltage value and obtained from power feed path (19). With this aspect, even when no power is fed from connecting device (20, 20A), electronic device (10) can be operated by battery (15).

A tenth aspect is electronic device (10) based on any one of the three to ninth aspects. In the tenth aspect, the plurality of first terminals (110) include a pair of ground terminals (114). The pair of ground terminals (114) are located on both sides of the following terminals arranged in a row: one or more power supply terminals (111), detection terminal (112), and one or more power reception terminals (113). This aspect can reduce a possibility that a failure of connector (11) or the like causes the following terminals to directly or indirectly come in contact with power reception terminals (113) and power supply terminals (111): first terminals (110) other than power reception terminals (113) and power supply terminals (111); or second terminals (210) not corresponding to power reception terminals (113) or power supply terminals (111).

An eleventh aspect is electronic device (10) based on any one of the third to tenth aspects. In the eleventh aspect, one or more power supply terminals (111), detection terminal (112), and one or more power reception terminals (113) are contact terminals having a shape that causes one or more power supply terminals (111), detection terminal (112), and one or more power reception terminals (113) to be connected to their corresponding ones of second terminals (210) by contact. This aspect makes it easy to connect electronic device (10) and connecting device (20, 20A).

A twelfth aspect is electronic device (10) based on the eleventh aspect. In the twelfth aspect, width directions of one or more power supply terminals (111), detection terminal (112), and one or more power reception terminals (113) coincide with a direction that one or more power supply terminals (111), detection terminal (112), and one or more power reception terminals (113) are arranged in. An interval between one or more power supply terminals (111), detection terminal (112), and one or more power reception terminals (113) is wider than a width of one or more power supply terminals (111), detection terminal (112), and one or more power reception terminals (113). With this aspect, connector (11) can be configured to be compact, and, at the same time, the distance between power reception terminals (113) and power supply terminals (111) can be made large, so that it is possible to reduce the possibility that power reception terminals (113) and power supply terminals (111) are directly or indirectly short-circuited due to a failure of connector (11) or the like.

A thirteenth aspect is connecting device (20) including the plurality of second terminals (210) that are connected to respective ones of the plurality of first terminals (110) of connector (11) of electronic device (10) according to any one of the first to twelfth aspects. The plurality of second terminals (210) include: one or more input terminals (211) that are connected to one or more power supply terminals (111) and receive the direct-current supply power from electronic device (10); and identification terminal (212) that is electrically separated from one or more input terminals (211) and is connected, as the specific terminal, to detection terminal (112). With this aspect, the voltage value of the direct-current supply power supplied from electronic device (10) to connecting device (20, 20A) can be set to a value corresponding to connecting device (20, 20A).

A fourteenth aspect is device system (1) including: electronic device (10) according to any one of the first to twelfth aspects; and connecting device (20) that is connected to electronic device (10). Connecting device (20) includes a plurality of second terminals (210) that are connected to respective ones of the plurality of first terminals (110) of connector (11) of electronic device (10). The plurality of second terminals (210) include: one or more input terminals (211) that are connected to one or more power supply terminals (111) and receive the direct-current supply power from electronic device (10); and identification terminal (212) that is electrically separated from one or more input terminals (211) and is connected, as the specific terminal, to detection terminal (112). With this aspect, the voltage value of the direct-current supply power supplied from electronic device (10) to connecting device (20, 20A) can be set to a value corresponding to connecting device (20, 20A).

A fifteenth aspect is a control method for supplying direct-current supply power from electronic device (10) to connecting device (20, 20A) connected to electronic device (10). Electronic device (10) includes connector (11) that includes a plurality of first terminals (110), and the plurality of first terminals (110) are connected to respective ones of a plurality of second terminals (210) of connecting device (20, 20A) and include: one or more power supply terminals (111) to supply direct-current power to connecting device (20, 20A); and detection terminal (112). The control method includes determining, when connecting device (20, 20A) is connected to connector (11), whether second terminal (210), among the plurality of second terminals (210), connected to detection terminal (112) is a specific terminal. The control method includes supplying direct-current supply power having a voltage value determined based on a result of the determining to connecting device (20, 20A) via one or more power supply terminals (111) of connector (11). With this aspect, the voltage value of the direct-current supply power supplied from electronic device (10) to connecting device (20, 20A) can be set to a value corresponding to connecting device (20, 20A).

### INDUSTRIAL APPLICABILITY

The present disclosure is applicable to an electronic device, a connecting device, a device system, and a control method. Specifically, the present disclosure is applicable to the followings: an electronic device that supplies direct-current supply power to a connecting device; a connecting device that receives direct-current supply power from an electronic device; a device system that supplies direct-current supply power from an electronic device to a connecting device, and a control method for supplying direct-current supply power from an electronic device to a connecting device.

### REFERENCE MARKS IN THE DRAWINGS

1: device system
10: electronic device
11: connector
110: first terminal
111: power supply terminal
112: detection terminal
113: power reception terminal
114: ground terminal
12: power feed circuit
121: voltage switch circuit
121a: DC/DC converter
121b: switch circuit
122: detection circuit
15: battery
16: power control and supply circuit
19: power feed path
20,20A: connecting device
210: second terminal
211: input terminal
212: identification terminal

## Claims

1. An electronic device comprising:
a connector including a plurality of first terminals that are connected to a plurality of second terminals of a connecting device, the plurality of first terminals including:
one or more power supply terminals to supply direct-current power to the connecting device; and
a detection terminal; and
a power feed circuit configured to:
perform, when the connecting device is connected to the connector, a determination whether a second terminal, among the plurality of second terminals, connected to the detection terminal is a specific terminal, and
supply direct-current supply power having a voltage value set based on a result of the determination to the connecting device via the one or more power supply terminals of the connector.

2. The electronic device according to Claim 1, wherein the detection terminal is adjacent to the one or more power supply terminals.

3. The electronic device according to Claim 1 or 2, wherein
the plurality of first terminals include one or more power reception terminals that receive direct-current power having a specified voltage value from the connecting device, and
the one or more power supply terminals, the detection terminal, and the one or more power reception terminals are arranged in a row such that the detection terminal is located between the one or more power supply terminals and the one or more power reception terminals.

4. The electronic device according to Claim 3, wherein
when the second terminal connected to the detection terminal is not the specific terminal, the power feed circuit sets the voltage value of the direct-current supply power to a first voltage value smaller than the specified voltage value, and
when the second terminal connected to the detection terminal is the specific terminal, the power feed circuit sets the voltage value of the direct-current supply power to a second voltage value larger than the first voltage value.

5. The electronic device according to Claim 4, wherein based on a voltage value of the detection terminal, the power feed circuit determines whether the second terminal connected to the detection terminal is the specific terminal.

6. The electronic device according to Claim 5, further comprising a power feed path that is connected to the one or more power reception terminals and receives the direct-current power having the specified voltage value, wherein
based on the direct-current power having the specified voltage value and obtained from the power feed path, the power feed circuit supplies the direct-current supply power to the connecting device connected to the connector.

7. The electronic device according to Claim 6, wherein
the power feed circuit includes:
a voltage switch circuit including:
a DC/DC converter that generates, based on the direct-current power having the specified voltage value and obtained from the power feed path, the direct-current supply power having the first voltage value and outputs the generated direct-current supply power to the one or more power supply terminals, and
a switch circuit connected between the power feed path and the one or more power supply terminals, and
a detection circuit that detects a voltage applied to the detection terminal, and
the detection circuit switches on and off of the switch circuit, based on the voltage value of the detection terminal.

8. The electronic device according to Claim 7, wherein the detection circuit turns off the DC/DC converter and the switch circuit in an initial state.

9. The electronic device according to any one of Claims 6 to 8, further comprising a power control and supply circuit that charges and discharges a battery to make the electronic device operate, wherein
based on the direct-current power having the specified voltage value and obtained from the power feed path, the power control and supply circuit charges the battery.

10. The electronic device according to any one of Claims 3 to 9, wherein
the plurality of first terminals include a pair of ground terminals, and
the pair of ground terminals are disposed such that the one or more power supply terminals, the detection terminal, and the one or more power reception terminals are located between the pair of ground terminals.

11. The electronic device according to any one of Claims 3 to 10, wherein each of the one or more power supply terminals, the detection terminal, and the one or more power reception terminals is a contact terminal having a shape that causes the each of the one or more power supply terminals, the detection terminal, and the one or more power reception terminals to be connected to a corresponding one of the second terminals by contact.

12. The electronic device according to Claim 11, wherein
width directions of the one or more power supply terminals, the detection terminal, and the one or more power reception terminals coincide with a direction that the one or more power supply terminals, the detection terminal, and the one or more power reception terminals are arranged in, and
an interval between the one or more power supply terminals, the detection terminal, and the one or more power reception terminals is narrower than a width of the one or more power supply terminals, the detection terminal, and the one or more power reception terminals.

13. A connecting device comprising the plurality of second terminals that are connected to the plurality of first terminals of the connector of the electronic device according to any one of claims 1 to 12, wherein
the plurality of second terminals include:
one or more input terminals that are connected to the one or more power supply terminals and receive the direct-current supply power from the electronic device; and
an identification terminal that is electrically separated from the one or more input terminals and is connected, as the specific terminal, to the detection terminal.

14. A device system comprising:
the electronic device according to any one of Claims 1 to 12; and
the connecting device that is connected to the electronic device, the connecting device including the plurality of second terminals that are connected to the plurality of first terminals of the connector of the electronic device, wherein
the plurality of second terminals include:
one or more input terminals that are connected to the one or more power supply terminals and receive the direct-current supply power from the electronic device, and
an identification terminal that is electrically separated from the one or more input terminals and is connected, as the specific terminal, to the detection terminal.

15. A control method for supplying direct-current supply power from an electronic device to a connecting device connected to the electronic device, wherein the electronic device includes a connector including a plurality of first terminals that are connected to a plurality of second terminals of the connecting device, the plurality of first terminals including one or more power supply terminals to supply direct-current power to the connecting device and a detection terminal, the control method comprising:
determining, when the connecting device is connected to the connector, whether a second terminal, among the plurality of second terminals, connected to the detection terminal is a specific terminal; and
supplying direct-current supply power having a voltage value set based on a result of the determining to the connecting device via the one or more power supply terminals of the connector.
